# EUROPÄISCHE PATENTSCHRIFT

(11) **EP 1 607 615 B1**
(45) Veröffentlichungstag und Bekanntmachung des Hinweises auf die Patenterteilung: **14.08.2013**
(21) Anmeldenummer: 05008706.3
(22) Anmeldetag: 21.04.2005
(51) Int. Cl.: F02M 35/10, F02M 35/116, F02B 27/02

(54) **Sauganlage für eine Brennkraftmaschine mit mindestens zwei Zylinderbankreihen**
Air intake system for an internal combustion engine with at least two cylinder banks
Système d'admission d'air pour un moteur à combustion interne avec au moins deux bancs de cylindres

(30) Priorität: 19.06.2004 DE 102004029746
(43) Veröffentlichungstag der Anmeldung: 21.12.2005
(73) Patentinhaber: Dr. Ing. h.c. F. Porsche AG, 70435 Stuttgart (DE)
(72) Erfinder: Fegg, Stefan, 70825 Korntal-Münchingen (DE); Wunsch, Thorsten, 71299 Wimsheim (DE); Romberg, Claudia, 70191 Stuttgart (DE)

(56) Entgegenhaltungen:
- DE-A1- 4 014 291
- DE-A1- 19 842 724
- DE-B3- 10 321 323

## Beschreibung

Die Erfindung betrifft eine Sauganlage für eine Brennkraftmaschine mit mindestens zwei Zylinderbankreihen gemäß den Merkmalen des Oberbegriffs des Patentanspruchs 1.

Sauganlagen mit Resonanz - Aufladung zur optimalen Füllung der Zylinder bei unterschiedlichen Drehzahlen bzw. Lastbereichen sind aus dem Stand der Technik bekannt. So ist in der DE 198 14 970 A1 eine Sauganlage dargestellt und beschrieben, bei der mit Hilfe einer kontinuierlich verstellbaren Steuereinrichtung das Resonanzbehältervolumen stufenlos bzw. kontinuierlich dem Last- bzw. Drehzahlbereich angepasst werden kann. An den Resonanzbehälter ist ein zweiflutiges Ansaugrohr angeschlossen, das stromabwärts einer Drosselklappe zu einem gemeinsamen Rohrabschnitt zusammengeführt ist. Damit kann beim Öffnen und Schließen der den einzelnen Zylinderbänken zugeordneten Einlassventilen die Gassäule zwischen beiden Zylinderbänken entsprechend hin- und herschwingen und somit eine dynamische Aufladung der Brennkraftmaschine erreicht werden.

Aus der DE 198 42 724 A1 ist ebenfalls eine Sauganlage mit schaltbaren bzw. veränderbaren Resonanzvolumina bekannt. Dabei sind die den beiden Zylinderbankreihen zugeordneten Resonanzbehälter über zwei Querkanäle miteinander verbunden. In den beiden Querkanälen sind Schaltklappen angeordnet, durch die die Eigenfrequenz der Sauganlage im Sinne einer optimalen Füllung der Zylinder entsprechend verändert werden kann. An dem einen, beide Resonanzbehälter verbindenden Querkanal sind zwei Einzel - Ansaugrohre angeschlossen, in deren, dem Querkanal zugeordneten Enden jeweils eine Drosselklappe zur Steuerung der zugeführten Luftmenge vorgesehen ist.

Aus der nicht vorveröffentlichten deutschen Patentanmeldung 103 21 323.6 der Anmelderin ist eine Schaltsauganlage bekannt, bei der gegenüber der in der DE 198 42 724 A1 vorgesehenen doppelten Drosselklappenausführung nunmehr lediglich eine in einer gemeinsamen Vorsaugstrecke angeordnete Drosselklappe vorgesehen ist. Damit kann die Gesamtlänge der Ansaugleitung variabler gestaltet werden, da das den beiden Ansaug - Einzelrohren vorgeschaltete gemeinsame Ansaugrohr die Weglänge der zwischen beiden Resonanzbehältern hin und her schwingenden Gassäule nicht beeinflusst. Somit kann das der Drosselklappe vorgeschaltete Luftfiltergehäuse, den Bauraumverhältnissen besser angepasst, im Motorraum auf einfache Art und Weise platziert werden.

Aufgabe der Erfindung ist es, unter Beibehaltung der Funktionalität die Sauganlage hinsichtlich Kostenaufwand und Package - Freiheitsgrad noch weiter zu verbessern.

Die Aufgabe wird durch die im Anspruch 1 angegebenen Merkmale gelöst.

Im Gegensatz zu der Ausführung der Sauganlage gemäß der DE 103 21 323.6 sind die beiden zu einem Querkanal der Sauganlage führenden Einzelrohre in einem zweiflutig ausgebildeten Verteilerrohr zusammengefasst, wobei im Verteilerrohr eine Innenwand integriert ist, die den Innenraum des Verteilerrohres in zwei - im wesentlichen im Querschnitt gleich ausgebildete - Teilkanäle unterteilt. Damit ist auf vorteilhafte Art und Weise der Bauraum- und Materialaufwand für die Sauganlage weiter reduziert. Das Verteilerrohr besteht dabei vorzugsweise aus Kunststoff, wobei das Verteilerrohr zusammen mit der Innenwand beispielsweise im Spritzgussverfahren herstellbar ist.

Durch die in den Unteransprüchen aufgeführten Maßnahmen sind weitere vorteilhafte Ausgestaltungen und Weiterbildungen der Sauganlage möglich.

Die in einem ersten Querkanal angeordnete Schaltklappe ist mit dem einen Ende ihrer Klappenachse an der im Verteilerrohr integrierten Innenwand gelagert. Dadurch ergibt sich bei geöffneter Klappenstellung - bei der über den Querkanal beide Ansaugkrümmer miteinander verbunden sind- ein minimaler Lufteinströmwiderstand, da die Klappenachse in Richtung der Luftströmung im Verteilerrohr ausgerichtet ist.

Ein Ausführungsbeispiel der Erfindung ist in der nachfolgenden Beschreibung und Zeichnung näher erläutert.

Es zeigen:

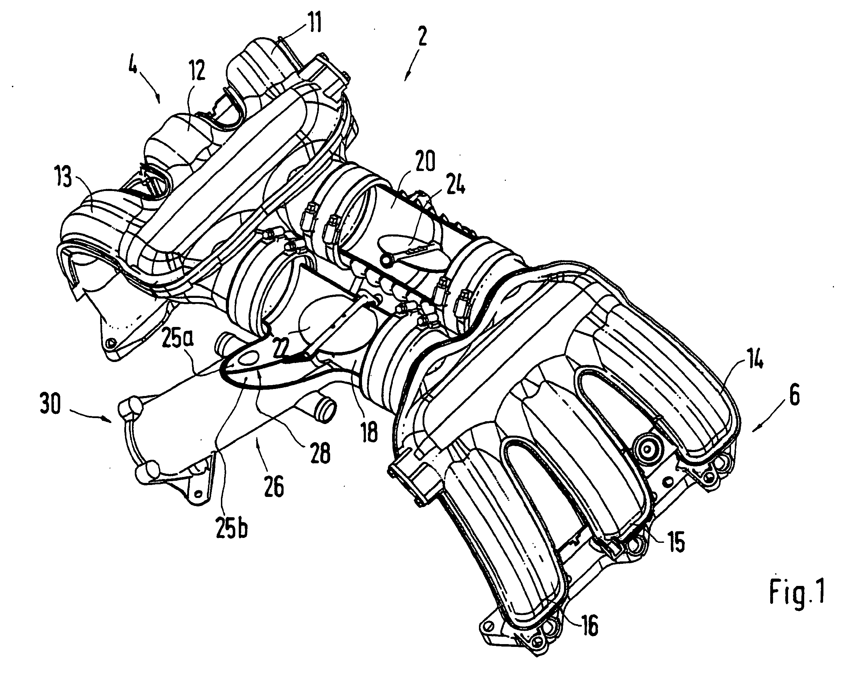

Fig. 1 eine schematisch dargestellte Sauganlage,

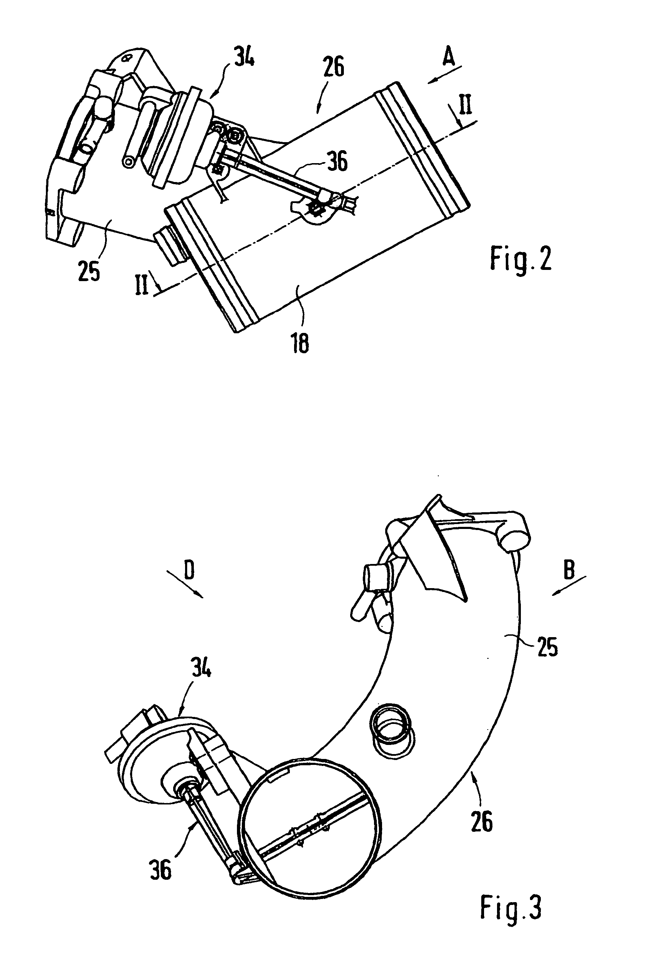

Fig. 2 ein Verteilerrohrmodul der Sauganlage in einer ersten Ansicht,
Fig. 3 eine Ansicht des Verteilerrohrmoduls in Richtung A,

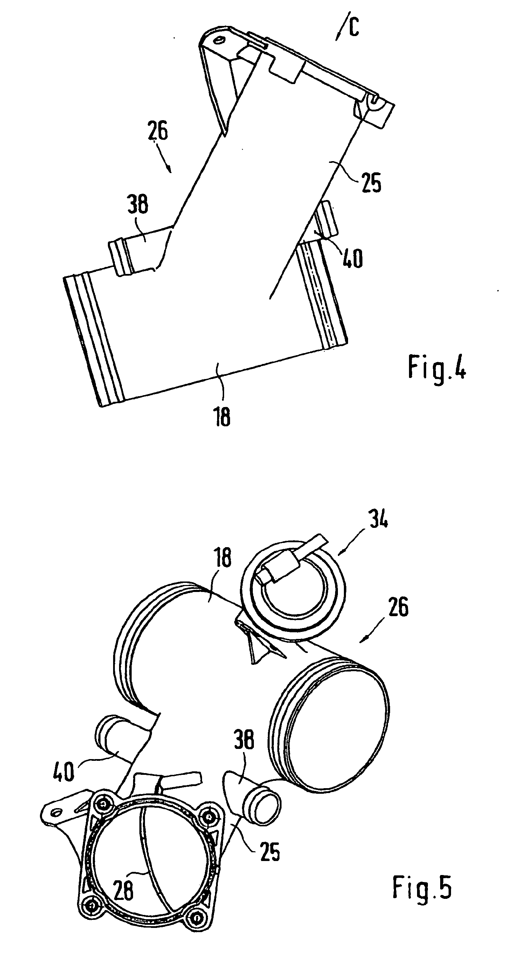

Fig. 4 eine Ansicht des Verteilerrohrmoduls in Richtung B,
Fig. 5 eine Ansicht des Verteilerrohrmoduls in Richtung C,
Fig. 6 eine Ansicht des Verteilerrohrmoduls in Richtung D und
Fig. 7 einen Querschnitt durch das Verteilerrohrmodul entlang der Linie II-II in Fig. 2.

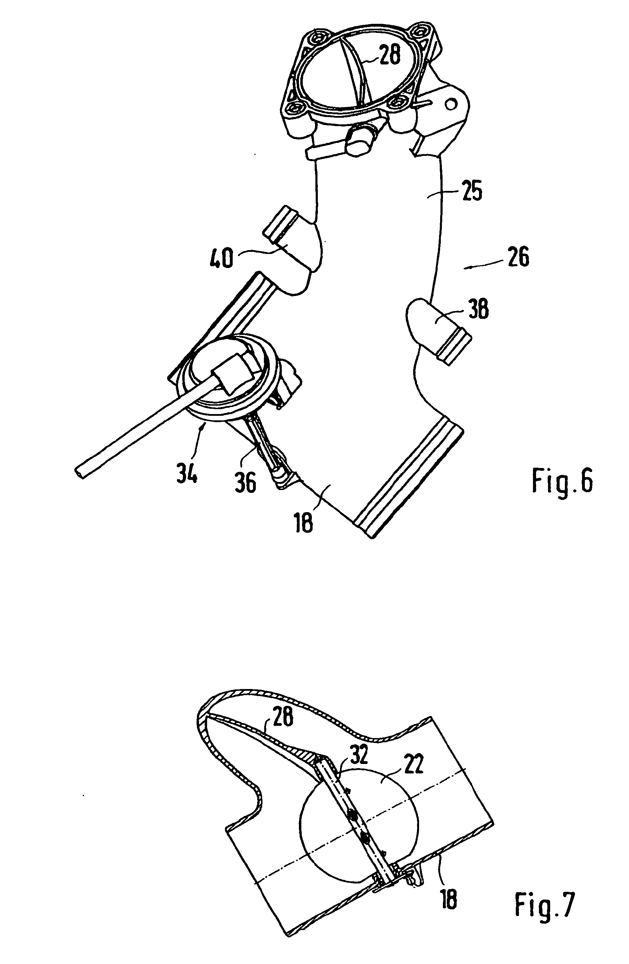

Die für einen 6 - Zylinder - Boxermotor ausgebildete Sauganlage 2 weist für jede Zylinderreihe einen Ansaugkrümmer 4 und 6 mit Einzel- Ansaugrohren 11 bis 13 bzw. 14 bis 16 auf, die zu jeweils einem nicht dargestellten Zylinderkopf führen. Die Ansaugkrümmer 4 und 6 sind über zwei Querkanäle, die als Verbindungsrohre 18 und 20 ausgebildet sind, miteinander verbunden. In beiden Verbindungsrohren 18 und 20 ist jeweils eine Schaltklappe 22 und 24 vorgesehen, die -bezogen auf die Länge der beiden Verbindungsrohre 18, 20 - im wesentlichen mittig gelagert sind und deren Funktionsweise später noch näher erläutert wird. Das erste Verbindungsrohr 18 ist einstückig mit einem zweiflutigen Verteilerrohr 25 verbunden, in dem über eine bestimmte Resonanzrohrlänge zwei Teilkanäle 25a und 25b ausgebildet sind. Verbindungsrohr 18 und Verteilerrohr 25 bilden zusammen ein Verteilerrohrmodul 26. Im Verteilerrohr 25 ist eine Innenwand 28 integriert, die so im Innenraum des Verteilerrohres 25 ausgerichtet ist, dass beide Teilkanäle 25a und 25b einen im wesentlichen gleichen Querschnitt aufweisen. Das Verteilerrohrmodul 26 wird einteilig inklusive Innenwand 28 im Spritzgussverfahren mittels Drehkerntechnik hergestellt. Wie aus Fig. 7 ersichtlich, ist die Klappenachse 32 der Schaltklappe 22 mit ihrem einen Ende an der Gehäusewand des Verbindungsrohres 18 und mit ihrem anderen Ende an der im Verteilerrohr 25 ausgebildeten Innenwand 28 gelagert. Am Verteilerrohrmodul 26 ist zur Steuerung der Schaltklappe 22 weiterhin eine Unterdruckdose 34 befestigt, die über ein entsprechendes Gestänge 36 mit der Schaltklappe 22 verbunden ist. Zwei einstückig aus dem Verteilerrohr 25 herausgebildete Anschlussstutzen 38 und 40 dienen der Kurbelgehäuseentlüftung, bei der die blowby-Gase aus dem Kurbelgehäuse wieder der Sauganlage zugeführt werden, während ein weiterer Stutzen 41 der Tankentlüftung dient.

Stromaufwärts schließt sich an das Ende des Verteilerrohres 25 ein Drosselklappengehäuse 30 an, in dem eine Drosselklappe zur Regelung der Luftmenge angeordnet ist. Stromaufwärts vom Drosselklappengehäuse 30 ist der Luftmassenmesser sowie das Luftfiltergehäuse der Brennkraftmaschine angeordnet.

Die Resonanz - Sauganlage funktioniert dabei auf folgende Art und Weise. In einem unteren Drehzahlbereich, vorzugsweise zwischen 1000 und 3500 U/min sind beide in den Verbindungsrohren 18 und 20 angeordnete Schaltklappen 22 und 24 geschlossen. Damit wird die Verbrennungsluft den beiden Ansaugkrümmern 4 und 6 über das Verteilerrohrmodul 26 jeweils getrennt zugeführt. Durch das zeitlich versetzt erfolgende Öffnen und Schließen der Einlassventile auf den beiden Zylinderbankreihen kann die Gassäule über die beiden Teilkanäle 25a und 25b des Verteilerrohres 25 zwischen den beiden Ansaugkrümmern 4 und 6 hin und her schwingen. In einem mittleren Drehzahlbereich, beispielsweise zwischen 3500 und 5000 U/min wird die im Verbindungsrohr 18 angeordnete Schaltklappe 22 geöffnet, während die zweite, im Verbindungsrohr 20 angeordnete Schaltklappe 24 noch verschlossen bleibt. Durch das Öffnen der Schaltklappe 22 wird die Eigenfrequenz der Sauganlage so verändert, dass aufgrund von Resonanzschwingungen eine dynamische Aufladung und damit eine bessere Füllung der Zylinder mit Verbrennungsluft erreicht wird. In einem oberen Drehzahlbereich, z. B. zwischen 5000 und 7000 U/min wird auch die zweite Schaltklappe 24 geöffnet, so dass wiederum die Eigenfrequenz der Sauganlage für die optimale Füllung der Zylinder entsprechend angepasst ist.

## Patentansprüche

1. Sauganlage für eine Brennkraftmaschine mit mindestens zwei Zylinderbankreihen (4, 6), denen jeweils ein Ansaugkrümmer (4, 6) mit zu den Zylindern führenden Einzelrohren (11 bis 13 bzw. 14 bis 16) zugeordnet ist, wobei die Ansaugkrümmer (4, 6) über mit Schaftklappen (22, 24) versehene Querkanäle (18, 20) miteinander verbunden sind, sowie mit einer zu einem der Querkanäle führenden Luftzufuhrleitung (25), in der eine Drosselklappe zur Regelung der Luftmenge angeordnet ist, wobei die Luftzufuhrleitung aus einem zu einem Querkanal (18) führende zweiflutigen Verteilerrohr (25) besteht, an das stromaufwärts ein Drosselklappengehäuse (30) angeschlossen ist, wobei im Vertellerrohr (25) eine Innenwand (28) integriert ist, die den Innenraum des Verteilerrohrs (25) in zwei - im wesentlichen im Querschnitt gleich ausgebildete - Teilkanäle (25a, 25b) unterteilt,
**dadurch gekennzeichnet, dass**
die in einem ersten Querkanal (18) angeordnete Schaltklappe (22) eine Klappenachse (32) aufweist, die mit ihrem einen Ende an der Innenwand (28) gelagert ist.

2. Sauganlage nach Anspruch 1, **dadurch gekennzeichnet, dass** die jeweils in einem Querkanal (18, 20) angeordnete Schaltklappe (22, 24) im wesentlichen mittig im Querkanal angeordnet ist.

3. Sauganlage nach Anspruch 1 oder 2, **dadurch gekennzeichnet, dass** der erste Querkanal (18) und das Verteilerrohr (25) zusammen einstückig als Vertellerrohrmodul (26) ausgebildet sind.

## Claims

1. Intake system for an internal combustion engine having at least two cylinder bank rows (4, 6) which are assigned in each case one intake manifold (4, 6) with individual pipes (11 to 13 and 14 to 16 respectively) leading to the cylinders, wherein the intake manifolds (4, 6) are connected to one another via transverse ducts (18, 20) provided with switching flaps (22, 24), and having an air feed line (25) which leads to one of the transverse ducts and in which is arranged a throttle flap for regulating the air flow rate, wherein the air feed line is composed of a two-channel distributor pipe (25) which leads to a transverse duct (18) and to which there is connected, upstream, a throttle flap housing (30), wherein, in the distributor pipe (25), there is integrated an inner wall (28) which divides the interior of the distributor pipe (25) into two partial ducts (25a, 25b) of substantially identical cross-sectional form,
**characterized in that**
the switching flap (22) arranged in a first transverse duct (18) has a flap shaft (32) which is mounted with one end thereof on the inner wall (28).

2. Intake system according to Claim 1, **characterized in that** the switching flap (22, 24) arranged in a respective transverse duct (18, 20) is arranged substantially centrally in the transverse duct.

3. Intake system according to Claim 1 or 2, **characterized in that** the first transverse duct (18) and the distributor pipe (25) are formed together in one piece as a distributor pipe module (26).

## Revendications

1. Système d'admission pour un moteur à combustion interne avec au moins deux bancs de cylindres (4, 6), auxquels est associé à chaque fois un collecteur d'admission (4, 6) avec des tubes individuels (11 à 13, respectivement 14 à 16) conduisant aux cylindres, les collecteurs d'admission (4, 6) étant connectés l'un à l'autre par le biais de canaux transversaux (18, 20) pourvus de clapets de commutation (22, 24), et avec une conduite d'amenée d'air (25) conduisant à l'un des canaux transversaux, dans laquelle conduite d'amenée d'air est disposé un clapet d'étranglement pour la régulation de la quantité d'air, la conduite d'amenée d'air se composant d'un tube distributeur (25) à double flux conduisant à un canal transversal (18), auquel tube distributeur est raccordé, en amont, un boîtier de clapet d'étranglement (30), une paroi interne (28) étant intégrée dans le tube distributeur (25), laquelle divise l'espace interne du tube distributeur (25) en deux canaux partiels (25a, 25b) réalisés de manière sensiblement identique en section transversale, **caractérisé en ce que**
le clapet de commutation (22) disposé dans un premier canal transversal (18) présente un axe de clapet (32), qui est supporté par une extrémité au niveau de la paroi interne (28).

2. Système d'admission selon la revendication 1, **caractérisé en ce que** le clapet de commutation (22, 24) disposé à chaque fois dans un canal transversal (18, 20) est disposé sensiblement centralement dans le canal transversal.

3. Système d'admission selon la revendication 1 ou 2, **caractérisé en ce que** le premier canal transversal (18) et le tube distributeur (25) sont réalisés ensemble d'une seule pièce sous forme de module de tube distributeur (26).
